# EUROPEAN PATENT SPECIFICATION

(11) **EP 0 395 166 B1**
(45) Date of publication and mention of the grant of the patent: **22.03.1995**
(21) Application number: 90201021.4
(22) Date of filing: 23.04.1990
(51) Int. Cl.: A01G 9/10, B66F 9/12

(54) **Transporter for potted plants**
Transportvorrichtung für Topfpflanzen
Dispositif de transport pour plantes en pot

(30) Priority: 24.04.1989 NL 8901023; 22.09.1989 NL 8902377
(43) Date of publication of application: 31.10.1990
(73) Proprietor: Olsthoorn, Robertus Marinus Cornelis, 2678 LZ De Lier (NL); Olsthoorn, Marcel Antonius Maria, 2678 LZ De Lier (NL)
(72) Inventor: Olsthoorn, Robertus Marinus Cornelis, NL-2678 LZ De Lier (NL); Olsthoorn, Marcel Antonius Maria, NL-2678 LZ De Lier (NL)
(74) Representative: Hoorweg, Petrus Nicolaas

(56) References cited:
- WO-A-83/00274
- DE-C- 934 573
- GB-A- 1 022 637
- NL-A- 7 704 744
- NL-A- 7 808 459
- US-A- 3 097 009

## Description

The present invention relates to an apparatus for transporting substantially frusto-conical plant pots, arranged in at least one row, the apparatus comprising:
- at least two bar-shaped carriers extending parallel, wherein the distance between the carriers is smaller than the largest diameter of the plant pots;
- a frame to which the carriers are connected;
- a coupling member for connecting said frame to lifting and transporting means.

Such an apparatus is known from WO-A-8300274.

This known apparatus comprises two levels of bar-shaped carriers, of which the carriers, belonging to the upper level, are liftable to have a selection of the plant pots lifted, so that the plant pots resting on the lower level of bars can be relocated. This is a cumbersome and labour consuming apparatus.

The present invention provides such an apparatus, in which in each of the bar-shaped carriers at least one recess has been provided, recesses in adjacent carriers having been mutually aligned;
- the recesses present in each of the carriers being provided with an additional carrying element, the widths thereof being substantially corresponding with the depth of the recesses, the additional carrying elements being rotatable around or slidable out of a longitudinal side of the carriers.

This apparatus uses less energy, as plant pots do not have to be lifted to a second level. Further the construction thereof lends itself better to automatic handling and to connecting to a fork-lift truck.

The invention relates further to a method for enlarging the mutual distance between plant pots arranged in a row, comprising the following steps:
- arranging a carrier at both sides of the row of plant pots;
- lifting the plant pots in the row simultaneously and displacing them over a desired distance;
- enlarging the interval between the the carriers at the position of at least one of the plant pots to an interval which is greater than the largest outer dimension of the plant pots;
- simultaneously lifting the plant pots where the interval has not been enlarged by the carriers;
- displacing the lifted plant pots over a desired distance;
- whereafter a following plant pot is separated from the row and the above stated operations are repeated until the last pot of the row is placed at a distance from the preceding plant pot.

The invention will be further elucidated hereafter with reference to the annexed drawing, in which:
fig. 1 shows a perspective front view of a device according to the prior art;
fig. 2 shows a perspective view of another apparatus according to the prior art;
fig. 3 shows another view of the apparatus according to fig. 2;
fig. 4a-4d show front views of several stages during the lifting of the plant pots with the device according to fig. 2;
fig. 5 shows a side view of an apparatus according to fig. 3 connected with the fork lift truck;
fig. 6 shows a perspective front view of the apparatus according to the invention, connected with a fork lift truck;
fig. 6a shows a schematic top view of the free ends of two adjacent carriers according to the embodiment shown in fig. 6;
fig. 7 is a perspective view of the apparatus shown in fig. 6;
fig. 8 shows a perspective detailed view of another embodiment of the invention;
fig. 9 shows a front view of a collection of plant pots during the placing at a distance according to the invention; and
fig. 10-12 show successive stages of the placing at a distance of the plant pots with the device according to the invention.

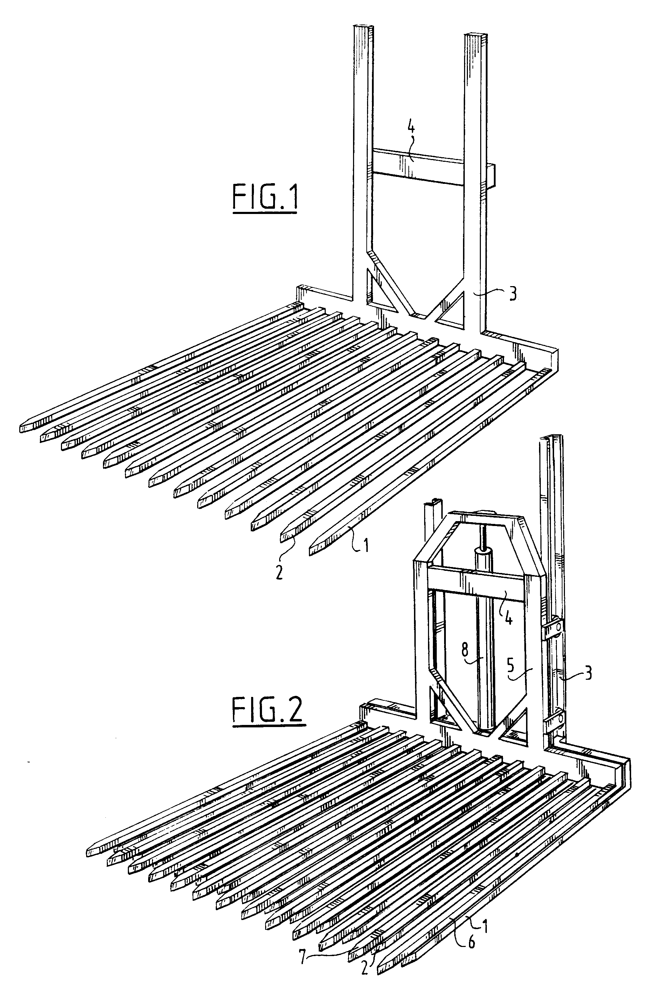

A device according to the prior art is shown in fig. 1.

As shown, the device comprises elongate, preferably horizontal carriers such as 1 and 2, which are connected to a frame 3. This frame 3 is provided with a coupling member 4, whereby it is possible to couple the device to for instance a forklift truck.

It is noted that this coupling member can be of any design suitable for the present purpose, and is not further shown for the sake of clarity.

It is in this way possible to displace the device vertically as well as horizontally.

It is remarked that the interval between the carriers is of course adapted to the dimensions of the plant pots to be displaced. When the length of the carriers and the width of the bearing surface amount to ± 1.5 m. the device shown, which comprises 13 carriers, can lift and displace 12 rows of plant pots with 12 pots in each row. By therefore coupling the device to for instance a forklift truck, it is thus possible to lift and displace 144 potted plants at the same time, without any use of manpower. This number per bearing surface can of course be modified by adapting the number of carriers.

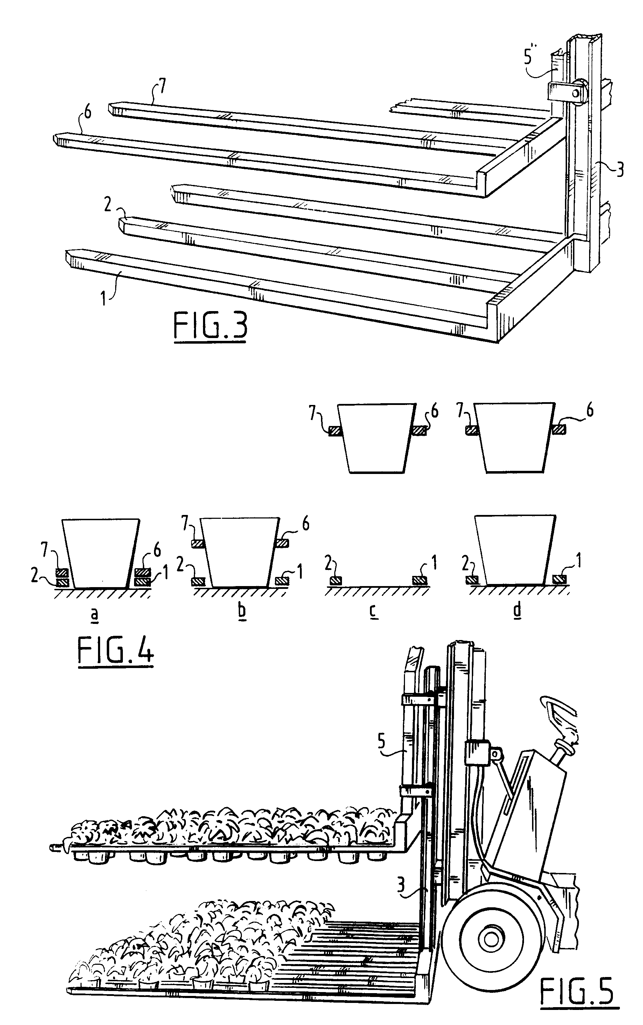

Another prior art device is shown schematically in fig. 2. More particularly this device comprises two bearing surfaces for plant pots placed above one another, consisting of elongate carriers such as 1 and 2 and 6 and 7. The bearing surface with the carriers 1 and 2 is connected to the frame 3 which is provided with a coupling member 4 to enable a coupling to for instance a forklift truck. Frame 5 which is connected with the carriers such as 6 and 7 is connected to frame 3 such that a vertical displacement along the columns of frame 3 can be effected. This can for instance be ensured using a piston device 8. It is noted that the carriers 1 and 6, and 2 and 7 respectively of both bearing surfaces rest upon each other in the start position and in efficient manner have the same width and mutual interval. Shown schematically in fig. 3 is the situation wherein frame 5 is vertically displaced relative to frame 3.

The operation of the device according to the invention is as follows, beginning with plant pots which all rest on a ground surface.

The device as shown in fig. 2, wherein the bearing surfaces rest on each other, is displaced such that the rows of plant pots to be lifted and displaced are situated between the successive carrier assemblies (1, 6 and 2, 7 etc.).

Although in the embodiment shown here the device has two bearing surfaces, this number can be increased, provided that it is ensured that the total height thereby obtained of the carriers present above each other makes possible a problem-free passage thereof in the start position along the plant pots for lifting.

The plant pots present between the carrier assemblies are then lifted by displacing the frame 5 vertically relative to frame 3. Because the interval between adjacent carriers is smaller than the diameter on the top side of a plant pot, the plant pots will remain hanging between the carriers.

The bearing surface connected to frame 5 is placed at an interval from the bearing surface connected to frame 3 such that the carriers connected to frame 3 such as 1 and 2 can be used to lift a following collection of plant pots.

The plant pots present on the various bearing surfaces are subsequently transported and set down on the desired position by performing the above explained operations in reverse sequence.

Fig. 4 shows several stages during lifting of plant pots with a device as shown in fig. 2, that is, with two bearing surfaces. Shown more particularly in fig. 4a is the starting position wherein the carrier assemblies 1, 6 and 2, 7 are situated close to the bottom of the plant pot and on either side thereof. Shown in fig. 4b is the situation wherein the bearing surface with the carriers 6, 7 is displaced by displacing frame 5, such that the plant pots still just support on the ground surface. By further displacing frame 5 the plant pots are lifted up (fig. 4c) and another collection of plant pots can be lifted up with the carriers such as 1, 2 connected to frame 3 and remaining in the start position (see fig. 4d).

It is noted that the carriers (1, 2, 6, 7) are shown with a rectangular section. It will however be apparent to a person skilled in the art that these can also have for instance a round section. In addition the carriers can be hollow.

The free outer ends of the carriers can in addition be provided with plant pot locking means. Such means serve to prevent that the plant pots present close to the outer ends of the carriers fall off the device during lifting and displacing thereof.

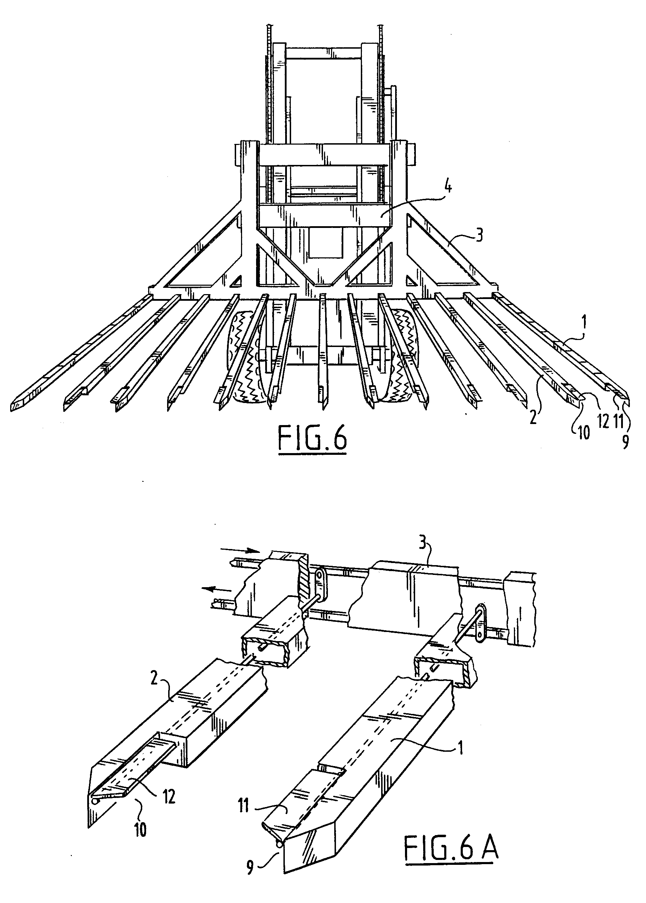

Fig. 5 shows a side view of a prior art device consisting of two bearing surfaces, which are provided with the potted plants for moving, and wherein the device is coupled to a (partially shown) forklift truck. The number of bearing surfaces can of course be increased, provided the total height of the elongate carriers placed on each other does not obstruct a problem-free passage thereof along the plant pots.

In fig. 6 the device according to the invention is shown connected to a forklift truck. As depicted, the device comprises horizontal, elongate carriers, such as the carriers 1 and 2, which are connected to a frame (3). This frame (3) is provided with a coupling member (6) whereby it is possible to connect the device to the forklift truck.

It is noted that this coupling member can have any design suitable for the present purpose, and for the sake of clarity is therefore not further shown.

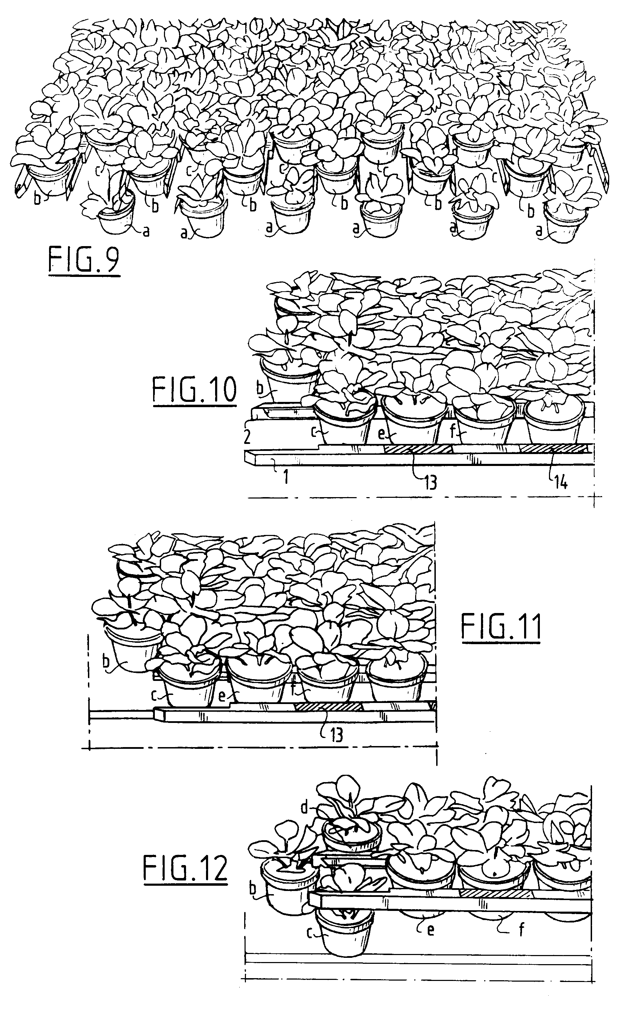

It is thus possible to displace the device vertically as well as horizontally. In the device shown here the free outer end of each carrier is provided with a recessed portion 9, 10 in a manner such that the recesses are arranged in the sides facing each other of two adjacent carriers. The recesses 9 and 10 of the respective carriers 1 and 2 are shown in fig. 6 in top view. These recesses can be provided with additional carrying elements 11, 12, preferably in the form of thin plates as depicted in fig. 6. These elements are rotatable around a longitudinal side of the carrier and have a width which substantially corresponds with the depth of the recess. The thickness of the elements 11, 12 and the depth of each recess is however such that the distance between the carriers is sufficient to enable a vertical displacement of the carriers along a plant pot. The distance between the carriers is, of course, adapted to the dimensions of the plant pots to be displaced. The device depicted here can, for instance, be used for placing at a distance 12 rows of plant pots with 12 pots in each row, wherein the pots have a dimension of ±12 cm. The length of each carrier and the width of the device then amount to ± 1.5 m. The method for placing plant pots at a distance using the present device will be further elucidated hereinafter with reference to fig. 9-12.

It is noted that the carriers 1, 2 are shown with a rectangular section. However it will be apparent to the person skilled in the art that these can likewise have for instance a round section. The carriers can in addition be hollow. This is particularly recommended for connecting the thin plates 11, 12 with a controlling device for automatic control.

Although the thin plates, such as 11, 12, are shown as elements which are rotatable around a longitudinal side of the carrier, the invention is not limited to such an embodiment. Another effective embodiment of the thin plates comprises that they can be pushed out of the hollow carriers to which they are connected to support a plant pot.

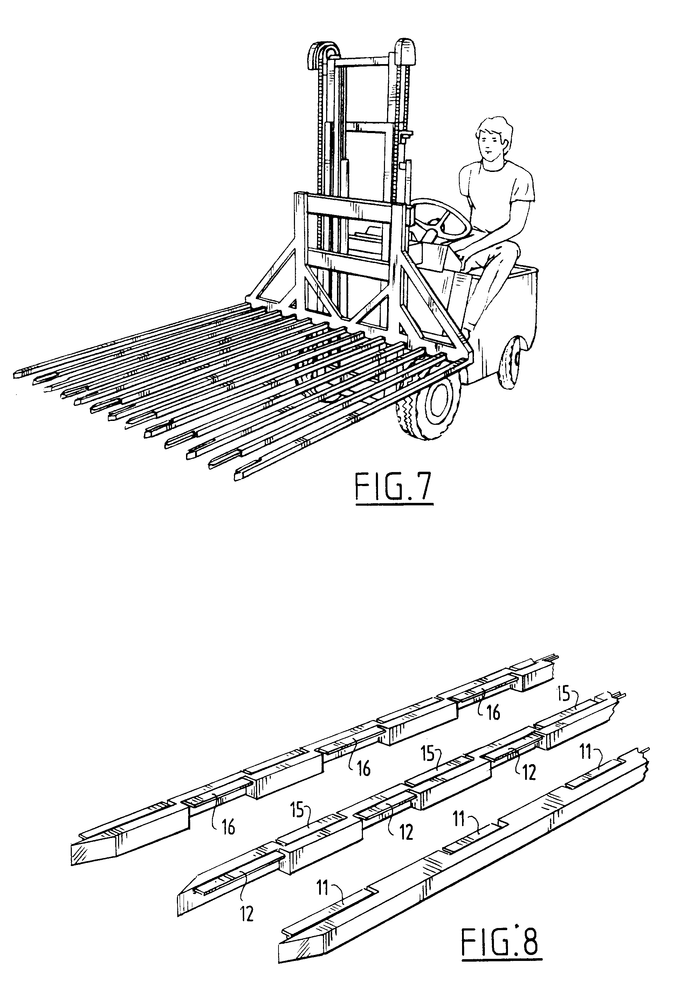

Fig. 7 shows the same device as depicted in fig. 6 in perspective view and fixed to a forklift truck.

Shown in fig. 8 is an alternative embodiment of the carriers wherein thin plates 11 and 12 are arranged in the relevant recesses close to the outer end of two adjacent carriers, corresponding to the situation shown in fig. 6 and fig. 7. Recesses are further arranged in the carriers at intervals from the first thin plates which correspond with at least the largest outer dimension of a plant pot, which recesses are likewise provided with thin plates such as 11 and 12. Such an embodiment makes it possible to place an entire row of plant pots at a mutual distance very rapidly.

Fig. 9-12 show the different stages of placing plant pots at a mutual distance using a device according to the invention as shown in fig. 6.

The first stage is shown in fig. 9. A first row of plant pots a has here already been set down. This is more particularly performed by arranging plant pots on the carriers of a device according to fig. 7 or fig. 8 and transporting them if desired. During transportation the plant pots rest on the horizontal carriers. Further, the thin plates 11, 12 are now in active position, that is, in horizontal position to support the plant pots so that the same number of plant pots is always present between the carriers. The plant pots are subsequently all set down by lowering the frame whereby the carriers move downward. When the carriers are practically at the location of the bottom of the plant pots, the pots are resting on a ground surface and the thin plates are brought into their non-active state, that is, they are turned into vertical position. When the device is lifted the plant pots a remain in place because the carriers have a larger interval at the point of the resulting recessed portions than the largest outer dimension of the plant pot. The plant pots b, c and further pots present in the rows are however lifted. The device, provided with these remaining plant pots, is then moved over a desired distance from the plant pots a, whereafter the plant pots are set down by lowering the frame. This situation is depicted in side view in fig. 10. The plant pots now all rest on the ground surface. The horizontal carriers 1 and 2 are removed sufficiently far from the top edge of the plant pots to enable horizontal movement of these carriers without touching the set down pots. The carriers are subsequently displaced over a distance which substantially corresponds with the largest outer dimension of a plant pot. This distance is shown on the horizontal carrier with the shaded parts 13 and 14. The situation thus obtained is shown in fig. 11. By comparing the situation shown in fig. 11 with that of fig. 10 it can be seen that plant pot b has come completely outside the reach of the horizontal carriers of the device, while plant pot c, which is in staggered position relative to plant pot b, is situated at the height of the recessed parts of the horizontal carriers. The markings 13, 14 arranged on the carrier 1 serve only to indicate the width of a plant pot.

Thereafter the plant pots are lifted by displacing the frame vertically upwards. The plant pots b and c then remain standing however. This situation is depicted in fig. 12.

The above operations are repeated until all the plant pots present on the carriers are placed at a desired mutual distance.

It is noted that the distance between the plant pots, such as b and c, can therefore be enlarged in diagonal direction by performing an extra operation between the situations shown in fig. 11 and fig. 12 which consists of first placing the thin plates, such as 11 and 12, into operational, that is, horizontal, position, lifting up the plant pots and setting them down at a distance. Thereafter the thin plates are placed in non-operational, that is, vertical, position. By placing the thin plates into operational state, the plant pots c will likewise be lifted and when the plant pots are set down again the distance between the plant pots b and c is consequently enlarged.

A rapid method, but one with little variation with regard to the mutual distance to be arranged between the plant pots, is performed with a device as shown schematically in fig. 8. As depicted the carriers are provided with recesses in which are arranged carrying elements in the form of rotatable thin plates 11, 12, 15 and 16. The recesses with their respective thin plates are arranged such that the plant pots in a row can be alternately supported by the carrying elements, while the plant pots in the adjacent row are supported in staggered manner relative to this first row by additional carrying elements. These carrying elements in the adjacent row are shown in fig. 8 in the form of thin plates 15 and 16. The placing of the plant pots at a mutual distance herein takes place as follows.

During transportation the plant pots rest on the horizontal carriers, wherein the thin plates are situated in a horizontal position. Thereafter the plant pots are all set down by lowering the frame, whereby the carriers move downward. When the carriers are practically at the height of the bottom of the plant pots, the pots rest on the ground surface and the thin plates are turned to their non-active, that is, vertical, position. When the device is lifted up the plant pots which were supported by these additional carrying elements now remain standing, while the other plant pots are lifted up. The device, provided with the other plant pots, is then moved over a distance which at least corresponds with that of the plant pots already set down, whereafter these other plant pots are set down by lowering the frame.

## Claims

1. Apparatus for transporting substantially frusto-conical plant pots, arranged in at least one row, the apparatus comprising:
- at least two bar-shaped carriers (1,2) extending parallel, wherein the distance between the carriers is smaller than the largest diameter of the plant pots;
- a frame (3) to which the carriers (1) are connected;
- a coupling member (4) for connecting said frame to lifting and transporting means,
**characterized in** that
- in each of the bar-shaped carriers (1,2) at least one recess (9,10) has been provided, recesses (9,10) in adjacent carriers (1,2) having been mutually aligned;
- the recesses (9,10) present in each of the carriers being provided with an additional carrying element (11,12), the widths thereof being substantially corresponding with the depth of the recesses (9,10), the additional carrying elements (11,12) being rotatable around or slidable out of a longitudinal side of the carriers (1,2).

2. Apparatus according to claim 1, **characterized in** that the additional carrying elements are thin plates (11,12) which are manufactured from a rigid material, in particular a plastic or metal, preferably stainless steel.

3. Apparatus according to one of the claims 1-2, **characterized in** that the apparatus is provided with a control device for automatic control of the apparatus.

4. Apparatus according to one of the claims 1-3, **characterized in** that only in the vicinity of the free ends of the bar-shaped carriers (1,2) recesses (9,10) with additional carrying element (11,12) have been provided.

5. Apparatus according to one of the claims 1-4, **characterized in** that in each carrier a number of recesses (9,10) with additional carrying elements (11,12, 15,16) has been provided, and being evenly distributed.

6. Apparatus according to claim 5, **characterized in** that more than two bar-shaped carriers (1,2) have been provided, and that all but the two outer carrier bars are provided with recesses (9,10) on both sides, the recesses being arranged staggered.

7. Apparatus according to one of the preceding claims, **characterized in** that the bar-shaped carriers (1,2) are arranged in two levels, the bar-shaped elements, belonging to the upper level being aligned with the bar-shaped carriers (1,2), belonging to the lower level, and the carriers belonging to the upper level being movable in a vertical direction.

8. Method for enlarging the mutual distance between plant pots arranged in a row, comprising the following steps:
- arranging a carrier at both sides of the row of plant pots;
- lifting the plant pots in the row simultaneously and displacing them over a desired distance;
- enlarging the interval between the the carriers at the position of at least one of the plant pots to an interval which is greater than the largest outer dimension of the plant pots;
- simultaneously lifting the plant pots where the interval has not been enlarged by the carriers;
- displacing the lifted plant pots over a desired distance;
- whereafter a following plant pot is separated from the row and the above stated operations are repeated until the last pot of the row is placed at a distance from the preceding plant pot.

## Patentansprüche

1. Vorrichtung zum Transport von im wesentlichen kegelstumpf-konischen Pflanzentöpfen, die in wenigstens einer Reihe angeordnet sind, wobei die Vorrichtung umfaßt:
- wenigstens zwei sich parallel erstreckende stangenförmige Träger (1, 2), wobei der Abstand zwischen den Trägern kleiner ist als der größte Durchmesser der Pflanzentöpfe;
- ein mit den Trägern (1) verbundener Rahmen (3);
- ein Kupplungselement (4) zur Verbindung des Rahmens mit Hebe- und Transportmitteln,
**dadurch gekennzeichnet**, daß
- in jedem der stangenförmigen Träger (1, 2) wenigstens eine Ausnehmung (9, 10) vorgesehen ist, wobei die Ausnehmungen (9, 10) in benachbarten Trägern (1, 2) in gegenseitiger Ausrichtung sind;
- die in jedem der Träger vorhandenen Ausnehmungen (9, 10) mit zusätzlichen Trägerelementen (11, 12) versehen sind, wobei die Breiten derselben im wesentlichen mit der Tiefe der Ausnehmungen (9, 10) korrespondieren, die zusätzlichen Trägerelemente (11, 12) drehbar um -, oder gleitbar aus einer Längsseite der Träger (1, 2) sind.

2. Vorrichtung nach Anspruch 1, **dadurch gekennzeichnet**, daß die zusätzlichen Trägerelemente aus dünnen Platten (11, 12) bestehen, die aus einem steifen Material, insbesondere einem Kunststoff oder Metall, vorzugsweise rostfreiem Stahl, hergestellt sind.

3. Vorrichtung nach einem der vorhergehenden Ansprüche 1 bis 2, **dadurch gekennzeichnet**, daß die Vorrichtung mit einer Steuervorrichtung zur automatischen Steuerung der Vorrichtung versehen ist.

4. Vorrichtung nach einem der Ansprüche 1 bis 3, **dadurch gekennzeichnet**, daß nur in der Nähe der freien Enden der stangenförmigen Träger (1, 2) Ausnehmungen (9, 10) mit einem zusätzlichen Trägerelement (11, 12) vorgesehen sind.

5. Vorrichtung nach einem der Ansprüche 1 bis 4, **dadurch gekennzeichnet**, daß in jedem der Träger eine Anzahl von Ausnehmungen (9, 10) mit zusätzlichen Trägerelementen (11, 12, 15, 16) vorgesehen ist, und diese gleichmäßig verteilt sind.

6. Vorrichtung nach Anspruch 5, **dadurch gekennzeichnet**, daß mehr als zwei stangenförmige Träger (1, 2) vorgesehen sind, und daß alle außer den beiden äußeren Trägerstangen mit Ausnehmungen (9, 10) auf beiden Seiten vorgesehen sind, wobei die Ausnehmungen versetzt angeordnet sind.

7. Vorrichtung nach einem der vorhergehenden Ansprüche, **dadurch gekennzeichnet**, daß die stangenförmigen Träger (1, 2) in zwei Ebenen angeordnet sind, wobei die stangenförmigen Elemente, die zur oberen Ebene gehören, in Ausrichtung mit den zu der unteren Ebene gehörenden stangenförmigen Trägern (1, 2) sind, und die Träger, die zur oberen Ebene gehören, in eine Vertikalrichtung bewegbar sind.

8. Verfahren zur Vergrößerung des gegenseitigen Abstandes von in einer Reihe angeordneten Pflanzentöpfen, umfassend die folgenden Schritte:
- Anordnung eines Trägers an beiden Seiten der Reihe der Pflanzentöpfe;
- gleichzeitiges Anheben der Pflanzentöpfe in Reihe und Versetzen derselben über einen gewünschten Abstand;
- Vergrößern des Zwischenraumes zwischen den Trägern in einer Position von wenigstens einem der Pflanzentöpfe auf einen Zwischenraum, der größer ist als die größte äußere Abmessung der Pflanzentöpfe;
- Gleichzeitiges Anheben der Pflanzentöpfe, wo der Zwischenraum nicht durch die Träger vergrößert wurde;
- Versetzen der angehobenen Pflanzentöpfe über einen gewünschten Abstand;
- wonach ein folgender Pflanzentopf von der Reihe abgesondert wird und die obenbeschriebenen Arbeitsschritte wiederholt werden, bis der letzte Topf der Reihe in einem Abstand vom vorhergehenden Pflanzentopf angeordnet ist;
- Absetzen der angehobenen Pflanzentöpfe,
**dadurch gekennzeichnet**, daß wenigstens einige der versetzten Pflanzentöpfe nochmals angehoben und über den Abstand versetzt werden, und die obenbeschriebenen Arbeitsschritte wiederholt werden, bis der letzte Topf der Reihe bei dem erreichten gegenseitigen Abstand gegenüber dem vorhergehenden Pflanzentopf angeordnet ist.

## Revendications

1. Appareil destiné à transporter des pots de plante sensiblement tronconiques, disposés sur au moins une rangée, l'appareil comprenant :
- au moins deux porteurs en forme de barre (1, 2) se prolongeant parallèlement, la distance entre les porteurs étant inférieure au plus grand diamètre des pots de plante ;
- un cadre (3) auquel les porteurs (1) sont reliés ;
- un élément de couplage (4) pour relier ledit cadre aux moyens de levage et de transport,
caractérisé en ce que
- dans chacun des porteurs en forme de barre (1, 2) au moins un évidement (9, 10) a été disposé, les évidements (9, 10) dans des porteurs adjacents (1, 2) ayant été mutuellement alignés ;
- les évidements (9, 10) présents dans chacun des porteurs étant équipés d'un élément porteur supplémentaire (11, 12), dont les largeurs correspondent sensiblement à la profondeur des évidements (9, 10), les éléments porteurs supplémentaires (11, 12) pouvant tourner autour de ou pouvant coulisser sur le côté longitudinal des porteurs (1, 2).

2. Appareil selon la revendication 1, caractérisé en ce que les éléments porteurs supplémentaires sont des plaques minces (11, 12) qui sont fabriquées à partir d'un matériau rigide, en particulier en plastique ou en métal, de préférence de l'acier inoxydable.

3. Appareil selon une des revendications 1 et 2, caractérisé en ce que l'appareil dispose d'un dispositif de commande pour la commande automatique de l'appareil.

4. Appareil selon l'une des revendications 1 à 3, caractérisé en ce que des évidements (9, 10) avec un élément porteur supplémentaire (11, 12) ont été disposés seulement à proximité des extrémités libres des porteurs en forme de barre (1, 2).

5. Appareil selon l'une des revendications 1 à 4, caractérisé en ce que dans chaque porteur un certain nombre d'évidements (9, 10) ont été disposés avec des éléments porteurs additionnels (11, 12, 15, 16), et sont distribués de façon régulière.

6. Appareil selon la revendication 5, caractérisé en ce que l'on dispose de plus de deux porteurs en forme de barre (1, 2), et en ce que toutes les barres de porteurs sauf les deux barres de porteurs extérieures disposent d'évidements (9, 10) sur les deux côtés, les évidements étant disposés en quinconce.

7. Appareil selon une des revendications précédentes, caractérisé en ce que les porteurs en forme de barre (1, 2) sont disposés sur deux niveaux, les éléments en forme de barre appartenant au niveau supérieur étant alignés avec les porteurs en forme de barre (1, 2) qui appartiennent au niveau inférieur, et les porteurs appartenant au niveau supérieur pouvant se déplacer dans le sens vertical.

8. Procédé pour augmenter la distance mutuelle entre les pots de plante d'une rangée, comprenant les étapes suivantes :
- disposer un porteur sur les deux côtés de la rangée des pots de plante ;
- soulever les pots de plante de la rangée simultanément et les déplacer sur une distance souhaitée ;
- augmenter l'intervalle entre les porteurs en une position d'au moins un des pots de plante jusqu'à un intervalle qui est supérieur à la plus grande dimension extérieure des pots de plante ;
- soulever simultanément les pots de plante où l'intervalle n'a pas été augmenté par les porteurs ;
- déplacer les pots de plante soulevés sur une distance souhaitée ;
- après quoi un pot de plante suivant est séparé de la rangée et les opérations indiquées ci-dessus sont répétées jusqu'à ce que le dernier pot de la rangée soit placé à une certaine distance du pot de plante précédent ;
- poser les pots de plante soulevés,
caractérisé en ce qu'au moins certains des pots de plante déplacés sont soulevés à nouveau et déplacés sur ladite distance, et les opérations indiquées ci-dessus sont répétées jusqu'à ce que le dernier pot de la rangée soit placé à la distance mutuelle dérivée du pot de plante précédent.
